# EUROPEAN PATENT APPLICATION

(11) **EP 3 940 276 A1**
(43) Date of publication of application: **19.01.2022**
(21) Application number: 20723521.9
(22) Date of filing: 11.03.2020
(51) Int. Cl.: F16K 17/164, A47J 27/09, F16K 17/02, F16K 17/12

(54) **PRESSURE-CONTROL DEVICE FOR PRESSURE VESSELS**

(30) Priority: 15.03.2019 PT 2019115368
(71) Applicant: SILAMPOS - Sociedade Industrial de Louça Metálica Campos SA, 3700-605 Cesar (PT)
(72) Inventor: DA COSTA CAMPOS, Anibal José, 3700-605 César (PT); DA COSTA CAMPOS ARAÚJO, Maria Julieta, 3700-605 César (PT)
(74) Representative: do Nascimento Gomes, Rui
(86) International application number: PCT/IB2020/052111
(87) International publication number: WO 2020/188408

(57) **Abstract**

This invention discloses a pressure-control device, which operates as a pressure indicator and limiter. This is provided by a specific structural configuration, which enables the developed pressure-control device to provide safety in the operation of the vessel at the pressure limit for which it was designed. This structural configuration also enables the device to operate automatically without the need for resetting if an overpressure level is reached.

## Description

### FIELD OF THE INVENTION

This invention falls within the scope of pressure-control devices for pressure vessels. In the context of this invention, examples of pressure vessels are aerosol-type containers, pressure cookers or other vessels susceptible of operating with a pressure level inside them which is higher than the atmospheric pressure level.

### BACKGROUND OF THE INVENTION

The present invention finds a closer background in pressure-control devices, generically referred to as pressure valves, applied to pressure vessels.

The typical operation of such a device is intrinsically related to the operation of the pressure vessel in which it is installed. In the specific case of a pressure cooker, when the latter is closed, it retains a quantity of air inside which is initially at atmospheric pressure. However, as the pan heats up, the cooking vapours increase and their escape to the outside is prevented by the airtight closure provided by the pressure cooker. In this way, in addition to the vapour pressure, there is the pressure of the air trapped inside the pan, which results in an increase on the internal pressure levels. When a pressure limit level is reached, a pressure valve installed on the lid of the pan is actuated, which functions as a protection fuse and, when triggered, allows the release of the excess steam, thus preventing the extreme pressure from damaging the pan and, ultimately, from causing an explosion. The pressure valve comprises within it a pin, which is nothing more than a piston, with a given mass, which moves vertically inside the said valve under the action of gravity and depending on the levels of dynamic pressure inside the pan. Once activated, the valve needs to be reset by the user in order to operate again.

In this context, the patent applications US2710627 A and EP1698814 A1 disclose particular embodiments for pressure-control valves which comply with the same technical principle, i.e. focusing on the controlled movement of a piston according to the pressure levels found inside the pressure vessel.

The state of the art covered by the above documents presents an important limitation since the current pressure valves are designed to act at the pressure limit for which they were designed, their structural configuration thus requiring a manual reset before each new operation.

### TECHNICAL PROBLEMS SOLVED

In the present invention, a pressure-control device was developed which, due to its specific structural configuration, provides protection when at the pressure limit for which it was designed, operating continuously without the need to be reset by the user.

In fact, the solution presented below, in addition to also being based on a piston aimed at controlling the escape of vapour pressure, comprises additional elements, specifically coupled to it, that allow the pressure-control device to operate as an automatic pressure limiter.

As such, the present invention refers to a pressure-control device, operating as a pressure limiter according to a predefined pressure level, in pressure vessels. More particularly, the present invention relates to a pressure-limiting device, with pressure indication, to be applied on pressure vessels, the purpose of which is to prevent the explosion of the said vessel in case of overpressure, i.e. when the pressure level inside it is higher than a given value.

### SUMMARY OF THE INVENTION

It is thus the object of this invention a pressure-control device particularly suitable for pressure vessels. Specifically, the developed device is installed on the pressure vessel through a perforation in its lid, thus operating as a limiter of the pressure levels inside the vessel and avoiding an explosion in case of overpressure.

Therefore, the present invention relates to a pressure-control device, comprised of a piston composed of a base from which a central body extends vertically. The piston base is positioned inside the pressure vessel and the central body extends from the inside to the outside of the pressure vessel. The piston is characterized in that it comprises a seal consisting of an elastomeric material, installed at its base, comprising a side flap that extends from the base of the piston towards the inner surface of the pressure vessel lid, without any contact between both elements, i.e., providing a gap between the flap and the lid. The piston also comprises a head, installed on top of the central body, which, according to the configuration of the device, is positioned outside the pressure vessel, and whose width is greater than the width of the central body. The central body of the piston is provided with a lateral protrusion in its central body, which is designed to make the width of the respective section of the central body of the piston greater than the width of the perforation in the lid of the pressure vessel.

The structural configuration of the developed device provides the vertical displacement of the piston under the action of dynamic pressure at its base, which can vary between an initial position and a final position. The initial position is given by the contact of the head with the outer surface of the pressure vessel lid, which is reached when the pressure level inside the pressure vessel is below a minimum pressure level. The final position is given by the contact of the surface of the vessel lid with the lateral protrusion of the central body and with the seal flap, which is reached when the pressure level inside the vessel is higher than the minimum pressure level.

In an advantageous configuration of the developed pressure-control device, the side flap of the seal has an original form, which extends from the base of the piston towards the inner surface of the pressure vessel lid at an angle of less than 90°.

In another advantageous configuration of the developed device, the pressure control is achieved by the displacement of the piston, under the action of the dynamic pressure at its base, between the initial and the final position, depending on the pressure level inside the pressure vessel. To this purpose, when the piston is in its final position, the seal flap is designed to:
- remain in their original form until a maximum pressure level supported by their constituent material is reached;
- deform when the maximum pressure level supported by its constituent material is exceeded, thus allowing the dynamic pressure to escape between the pressure vessel lid and the seal flap;
- return to its original position when the pressure level is equal to or lower than the maximum pressure level supported by its constituent material.

When the piston is in its initial position, the flap is in its original form.

### DESCRIPTION OF THE FIGURES

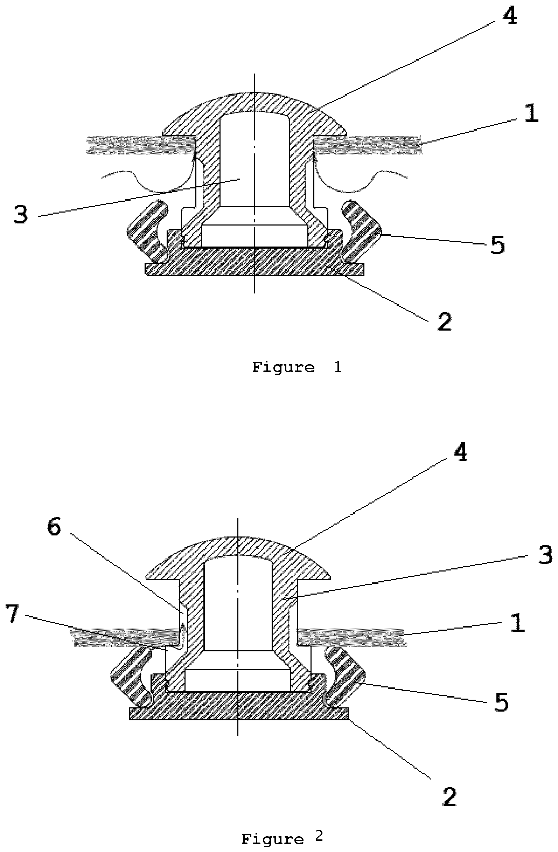

Figure 1 - illustration of a configuration of the pressure-control device in its initial position, i.e. when the pressure inside the pressure vessel is below a minimum level. The reference signs mean:
   1 - pressure vessel lid;
   2 - piston base;
   3 - central body of the piston;
   4 - piston head;
   5 - side flap of the seal.
Figure 2 - illustration of a configuration of the pressure-control device in its final position, i.e. when the pressure inside the pressure vessel is greater than a minimum level and less than or equal to a maximum level. The reference signs mean:
   1 - pressure vessel lid;
   2 - piston base;
   3 - central body of the piston;
   4 - piston head;
   5 - side flap of the seal;
   6 - side perforation in the central body;
   7 - lateral protrusion of the central body.

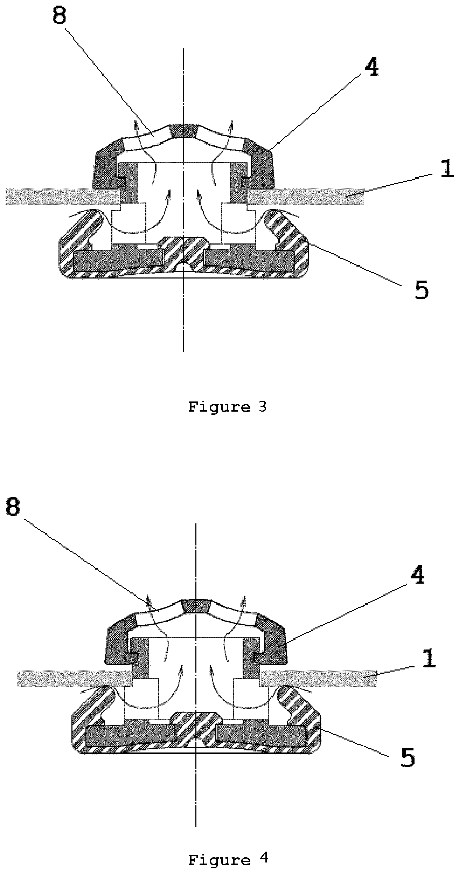

Figure 3 - illustration of a configuration of the pressure-control device in its initial position, i.e. when the pressure inside the pressure vessel is below a minimum level, with the seal flap in its original position. The reference signs mean:
   1 - pressure vessel lid;
   4 - piston head;
   5 - side flap of the seal;
   8 - head perforations.
Figure 4 - illustration of a configuration of the pressure-control device in its final position, i.e. when the pressure inside the pressure vessel is higher than a minimum level and lower than or equal to a maximum level, with the seal flap in its original position, in contact with the vessel lid. The reference signs mean:
   1 - pressure vessel lid;
   4 - piston head;
   5 - side flap of the seal;
   8 - head perforations.

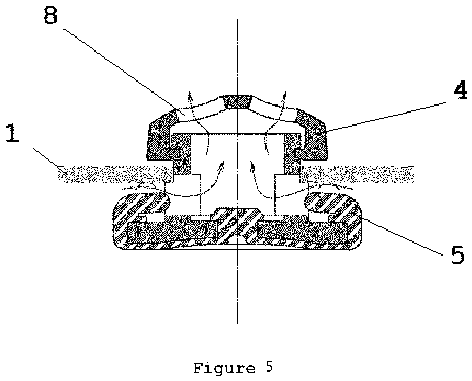

Figure 5 - illustration of a configuration of the pressure-control device in its final position, when the pressure inside the pressure vessel is higher than a maximum level, with the seal flap in its deformed position. The reference signs mean:
   1 - pressure vessel lid;
   4 - piston head;
   5 - side flap of the seal;
   8 - head perforations.

### DETAILED DESCRIPTION OF THE INVENTION

This invention makes it possible to control and limit the pressure levels inside a pressure vessel, avoiding its explosion in case of overpressure.

This is provided by a specific structural configuration, which enables the developed pressure-control device to provide safety in the operation of the vessel at the pressure limit for which it is designed. This structural configuration also enables the device to operate automatically without the need for resetting if an overpressure level is reached.

In a preferred configuration of this invention, the pressure-control device comprises a piston consisting of a base from which a central body extends vertically. This base is positioned inside the pressure vessel and the central body extends from the inside to the outside of the pressure vessel.

In the preferred configuration of this invention, the piston is characterised in that it comprises a seal, made of an elastomeric material, which is installed in its base and comprises a side flap of the same type of material, which extends from the base of the piston towards the inner surface of the pressure vessel lid, without there being any contact between the flap and the lid, thus providing a gap between both elements. The side flap of the seal has an original form, which extends from the base of the piston towards the inner surface of the pressure vessel lid at an angle of less than 90°. This specific flap configuration is important for the pressure control operation as it allows the dynamic pressure to be accommodated between the tilted surface of the flap and the inner surface of the vessel lid, favouring its deformation and consequent escape of the steam flow in case an overpressure level is reached. In a particular embodiment, the elastomeric material that constitutes the seal and its side flap is silicone. In another particular embodiment, the seal covers the entire piston base.

In the preferred configuration of this invention, the piston comprises a head which is installed at the top of its central body and is positioned outside the pressure vessel, thus being wider than the width of the central body. In this way, the head downwardly limits the vertical movement of the piston.

Still in a preferred configuration of this invention, the central body of the piston is provided with a lateral protrusion designed to make the width of the respective section of the central body of the piston larger than the width of the perforation in the pressure vessel lid. Thus, the central body consists of two sections of different widths, the one with the smallest width extending to the outside of the vessel towards the head, therefore having a width which, at most, is equal to the perforation on the vessel lid for installation of the device. It is also along the smaller width section that the piston is moved vertically. On the other hand, the larger width section is responsible for upwardly limiting the displacement of the piston, with the lateral protrusion acting as a stopper, providing contact with the inner surface of the vessel lid.

In this way, the structural configuration of the developed pressure-control device provides the vertical displacement of the piston under the action of dynamic pressure at its base, i.e., under the action of the steam flow inside the pressure vessel. The displacement of this piston varies from an initial position, given by the contact of the head with the outer surface of the pressure vessel lid, which is reached when the pressure level inside the pressure vessel is below a minimum pressure level, e.g. 4 kPa, to a final position, given by the contact of the surface of the vessel lid with the lateral protrusion of the central body, which is reached when the pressure level inside the vessel is above the minimum pressure level. When this occurs, the displacement of the piston promotes the resting of the seal flap on the inner surface of the pressure vessel, allowing the pressure to be controlled as per the behaviour of the seal flap, depending on the pressure level in the vessel.

Specifically, the pressure control is achieved by the piston movement, under the action of the dynamic pressure at its base, between the initial position and the final position, depending on the pressure level inside the pressure vessel. The material constituting the seal flap gives it such strength and flexibility that:

When the piston is in the final position of the piston, i.e. when a pressure level above a minimum level is reached inside the vessel, it:
- - remains in its original form until a maximum pressure level supported by its constituent material is reached;
- deforms when the maximum pressure level supported by its constituent material is exceeded, thus allowing the dynamic pressure to escape between the pressure vessel lid and the seal flap;
- returns to its original position when the pressure level is equal to or lower than the maximum pressure level supported by its constituent material;

On the other hand, when the piston is in its initial position, due to pressure levels being below the minimum level, the flap is in its original form.

Maximum and minimum pressure levels depend on the particular characteristics of the pressure-control device, such as its total weight or the open section area through which the dynamic pressure escapes, and may vary according to the needs of each practical case.

In a particular embodiment of the pressure-control device, the central body of the piston has a perforated side surface and an inner cavity, in which the said side perforations and inner cavity are interconnected and are designed to provide the dynamic pressure escape from the inside to the outside of the pressure vessel. In order to facilitate the dynamic pressure escape, the head also comprises perforations, leading it through the inner cavity of the central body of the piston.

Alternatively, in another particular embodiment of the pressure-control device, the central body of the piston comprises exhaust channels on its surface, which are adapted to provide dynamic pressure escape from the inside to the outside of the pressure vessel.

In an alternative embodiment of the pressure-control device, the main body of the piston and the head are integrated into one single part.

In a preferred embodiment of the pressure-control device, it also functions as a pressure indicator. This is achieved by the visual effect caused by the side walls of the central body of the piston, when it is in its final position, indicating that the vessel is under pressure. The visual effect is caused by the different colouring of the central body compared to the colouring of the head.

This invention also describes a pressure vessel comprising a cavity adapted to contain matter in the solid, liquid or gaseous state, which is closed by a lid. This lid is comprised of at least one perforation which is suitable for the installation of a pressure-control device such as the one herein disclosed.

In a preferential configuration of the pressure vessel, the perforation on its lid for the installation of the pressure-control device provides a complete and perfect adjustment to the central body of the piston, without a gap between the two.

Alternatively, the perforation on the pressure vessel lid, aimed at installing the pressure-control device, provides an adjustment to the central piston body with a gap between the two.

As will be evident to a person skilled in the art, the present invention should not be limited to the embodiments described herein, with a number of changes being possible, which remain within the scope of this invention.

Of course, the preferred embodiments above described are combinable in the different possible forms, the repetition of all such combinations being herein avoided.

## Claims

1. A pressure-control device for pressure vessels, the said pressure vessel comprising a lid with a perforation for installation of the pressure-control device; and wherein the pressure-control device comprises a piston consisting of a base from which a central body extends vertically; the said base being positioned inside the pressure vessel and the central body extending from the inside to the outside of the pressure vessel, and wherein the piston is **characterized in that** it comprises:
- a seal made of an elastomeric material, installed in its base, comprising a side flap of the same material, which extends from the piston base towards the inner surface of the pressure vessel lid, without contact between the flap and the lid;
- a head, installed on top of its central body, on the outside of the pressure vessel, the width of which is greater than the width of the central body;
- a lateral protrusion in its central body, designed to make the width of the respective section of the central body of the piston greater than the width of the perforation on the lid of the pressure vessel.

2. A device according to claim 1, **characterized in that** the side flap of the seal has an original form, which extends from the piston base towards the inner surface of the pressure vessel lid at an angle of less than 90°.

3. A device according to claims 1 and 2, **characterized in that** it is configured to provide the vertical displacement of the piston under the action of dynamic pressure at its base, this piston varying between:
- an initial position, given by the contact of the head with the outer surface of the pressure vessel lid, which is reached when the pressure level inside the pressure vessel is below a minimum pressure level; and
- a final position, given by the contact of the surface of the pressure vessel lid with the lateral protrusion of the central body and with the seal flap, which is reached when the pressure level inside the pressure vessel is above the minimum pressure level.

4. A device according to claim 3, **characterized in that** the pressure control is achieved by the displacement of the piston, under the action of dynamic pressure at its base, between the initial position and the final position, depending on the pressure level inside the pressure vessel, with the seal flap being designed to:
- in the final position of the piston:
- remain in its original form until a maximum pressure level supported by its constituent material is reached;
- deform, when the maximum pressure level supported by its constituent material is exceeded, allowing the dynamic pressure to escape between the pressure vessel lid and the seal flap;
- return to its original position when the pressure level is equal to or lower than the maximum pressure level supported by its constituent material;
- in the initial position of the piston:
- remain in its original form.

5. A device according to any of the previous claims, **characterized in that** the seal and the side flap thereof are made of silicone.

6. A device according to any of the above claims, **characterized in that** the central body of the piston has a perforated side surface and an inner cavity wherein the said side perforations and inner cavity are interconnected and are designed to provide dynamic pressure escape from the inside to the outside of the pressure vessel.

7. A device according to claim 6, **characterized in that** the head comprises perforations that are adapted to provide dynamic pressure escape through the inner cavity of the central body of the piston.

8. A device according to any of the claims 1 to 5, **characterized in that** the central body of the piston comprises exhaust channels on its surface, which are suitable to provide dynamic pressure escape from the inside to the outside of the pressure vessel.

9. A device according to any of the previous claims, **characterized in that** the seal covers the entire piston base.

10. A device according with any of the previous claims, **characterized in that** the main body of the piston and the head are integrated into one single part.

11. A device according to any of the previous claims, **characterized in that** the side surface of the piston has a different colouring from that of the head.

12. A pressure vessel comprising a cavity adapted to contain matter in the solid, liquid or gaseous state and which is closed by a lid, the said lid being **characterized in that** it is comprised of at least one perforation which is suitable for the installation of a pressure-control device such as the one claimed in claims 1 to 11.

13. A vessel according to claim 12, **characterized in that** the perforation on the pressure vessel lid, for installation of the pressure-control device, provides an adjustment to the central body of the piston without a gap.

14. A vessel according to claim 12, **characterized in that** the perforation on the pressure vessel lid, for installation of the pressure-control device, provides an adjustment to the central body of the piston with a gap.

15. Use of the pressure-control device of claims 1 to 11 in pressure vessels such as pressure cookers.
